# FASCICULE DE BREVET EUROPEEN

(11) **EP 2 253 502 B1**
(45) Date de publication et mention de la délivrance du brevet: **10.10.2012**
(21) Numéro de dépôt: 10162223.1
(22) Date de dépôt: 06.05.2010
(51) Int. Cl.: B60N 2/28

(54) **Siège auto pour enfant**
Autokindersitz
Car child seat

(30) Priorité: 12.05.2009 FR 0953134
(43) Date de publication de la demande: 24.11.2010
(73) Titulaire: Dorel France SA, 49309 Cholet Cedex (FR)
(72) Inventeur: Biaud, Richard, 49340 Trementines (FR); Lhomme, Gilles, 85180 Chateau d'Olonne (FR)
(74) Mandataire: Bioret, Ludovic

(56) Documents cités:
- EP-A1- 0 816 163
- WO-A2-2005/079159
- US-A1- 2008 169 692

## Description

### 1. Domaine de l'invention

Le domaine de l'invention est celui de la puériculture. Plus précisément, l'invention concerne les sièges pour enfants, destinés à être installés dans un véhicule automobile. Un tel siège pour enfant est destiné à être utilisé pendant une période relativement importante de la vie d'un enfant par rapport notamment à l'évolution de sa morphologie et/ou par différents enfants.

Il est donc nécessaire que ce siège puisse évoluer et/ou être adapté à l'enfant transporté. Une telle adaptabilité est également souhaitable pour tenir compte de la façon dont l'enfant est habillé.

### 2. Art antérieur

Dans le domaine de l'invention, divers systèmes ont été proposés par l'art antérieur pour permettre le réglage de la largeur de la structure d'un siège, afin de l'adapter à l'enfant transporté.

On connaît en particulier du brevet européen EP 0 816 163 un siège pour enfant du type comprenant un baquet muni d'une assise et d'un dossier, destiné à être posé et fixé sur un siège de véhicule automobile. Deux éléments de châssis latéraux sont montés d'un côté et de l'autre du baquet, définissant deux armatures d'un ensemble latéral d'accoudoir et de protection latérale (s'étendant depuis le dossier), de façon à pivoter entre une position mutuellement rapprochée et une position écartée, le pivotement des éléments de châssis latéraux étant commandé simultanément au moyen d'un organe de commande placé sur l'avant de la partie d'assise.

Un inconvénient de cette technique est qu'elle suppose la présence de jeux de montage, pour fonctionner de façon efficace. Un autre inconvénient est que le déplacement des ensembles latéraux n'est pas optimisé, par rapport à la morphologie d'un enfant.

### 3. Objectifs de l'invention

Il existe un besoin pour améliorer un tel système.

Il existe encore un besoin pour ajuster le siège à la morphologie de l'enfant.

Il existe encore un besoin pour faciliter le pivotement des éléments de châssis latéraux.

Il existe en particulier un besoin pour faciliter l'installation d'un enfant malgré la présence d'accoudoirs ou d'éléments de protection latérale.

Il existe un besoin pour améliorer la protection latérale de l'enfant assis dans le siège.

La présente invention vise notamment à répondre à tout ou partie de ces besoins.

### 4. Exposé de l'invention

L'invention y parvient grâce à un siège pour enfant selon la revendication 1.

Grâce à l'invention, le déplacement des accoudoirs et des éléments de protection latérale est plus linéaire et ne présente pas ou quasiment pas de jeu fonctionnel. De plus, la présence de moyens de liaison entre le premier et le deuxième éléments d'ossature permet d'augmenter les possibilités de positionnement et de forme des premier et deuxième éléments d'ossature, ce qui permet d'adapter la position des accoudoirs et éléments de protection latéral au mieux à la morphologie de l'enfant.

Les caractéristiques complémentaires énumérées ci-après font l'objet des revendications dépendantes.

Selon un aspect de l'invention, le deuxième élément d'ossature est distinct du premier élément d'ossature.

Le déplacement dudit premier élément d'ossature et dudit deuxième élément d'ossature est un pivotement. Le premier élément d'ossature pivote autour d'un axe sensiblement parallèle à un plan défini par l'assise. Le deuxième élément d'ossature pivote autour d'un axe sensiblement parallèle à un plan défini par le dossier.

Le pivotement peut se faire par exemple autour d'un axe sensiblement parallèle à un bord de l'assise pour le premier élément d'ossature. Le pivotement peut se faire par exemple autour d'un axe sensiblement parallèle à un bord du dossier pour le deuxième élément d'ossature.

Un avantage du fait que le pivotement de l'accoudoir et de l'élément de protection latérale se fasse au bord de l'assise et du dossier respectivement est que cela permet d'avoir un axe d'articulation de l'accoudoir sous les cuisses de l'enfant et un axe d'articulation de l'élément de protection latérale derrière l'épaule de l'enfant. Cela permet d'optimiser le déplacement des accoudoirs et éléments de protection latérale en fonction de la morphologie de l'enfant.

Les moyens de liaison entre le premier élément d'ossature et le deuxième élément d'ossature peuvent être situés sensiblement le long d'un axe formant la séparation entre l'assise et le dossier.

Les moyens de liaison peuvent appartenir au groupe comprenant les engrenages, notamment les engrenages avec renvoi d'angle, ou pignons de renvoi, les cardans et les dispositifs de renvoi d'angle souples, cette liste n'étant pas limitative.

De tels engrenages ou cardans peuvent permettre de réduire encore le jeu fonctionnel.

Au moins un accoudoir peut comporter un premier gabarit fixé sur le premier élément d'ossature et mobile en rotation relativement à la structure solidairement au premier élément d'ossature. Au moins un élément de protection latérale peut comporter un deuxième gabarit fixé sur ledit deuxième élément d'ossature et mobile en rotation relativement à la structure solidairement au deuxième élément d'ossature. Lesdits premier et deuxième gabarits peuvent être rapportés sur lesdits premier et deuxième éléments d'ossature ou être réalisés d'une seule pièce avec ceux-ci.

Ces premier et/ou deuxième gabarits peuvent contribuer à améliorer la sécurité latérale de l'enfant assis dans le siège. D'autres éléments peuvent être rapportés sur les éléments d'ossature pour améliorer la sécurité latérale de l'enfant, par exemple un revêtement, qui peut être commun à un accoudoir et un élément de protection latérale.

Les moyens de commande peuvent comporter un bouton de commande, par exemple mobile en rotation, permettant à un utilisateur d'actionner les moyens de commande pour modifier l'orientation des accoudoirs et des éléments de protection latérale. Le bouton de commande peut être par exemple disposé sur l'assise, sur une portion s'étendant par exemple vers l'avant du siège, par exemple en partie centrale, entre les jambes d'un enfant assis.

Le bouton de commande peut être motorisé.

Les moyens de commande peuvent comporter :
- un disque solidaire en rotation du bouton de commande, le disque comprenant au moins une rainure courbe,
- au moins un ergot agencé pour coulisser dans la rainure,
- au moins une pièce de liaison reliant ledit ergot au premier élément d'ossature, ladite pièce de liaison étant configurée de telle sorte que le déplacement de l'ergot dans la rainure entraîne le déplacement, notamment le pivotement, du premier élément d'ossature.

La pièce de liaison peut comporter au moins une crémaillère et/ou au moins une biellette liée audit ergot et mobile en translation relativement au disque, par exemple de telle sorte que le déplacement dudit ergot dans ladite rainure provoque le déplacement en translation de ladite au moins une crémaillère ou biellette, la crémaillère ou la biellette étant par exemple reliée audit premier élément d'ossature de manière à ce que le déplacement de la crémaillère ou de la biellette entraîne ledit premier élément d'ossature en pivotement.

Dans ce cas, l'ouverture ou la fermeture, c'est-à-dire le déplacement ou pivotement des accoudoirs et des éléments de protection latérale, est plus rapide pour obtenir une même amplitude que dans l'art antérieur décrit plus haut.

Les moyens de commande peuvent par exemple comporter un ou deux ergots, et une ou deux rainures formées dans le disque. Lorsqu'il y a deux rainures, celles-ci peuvent former avantageusement une double spirale.

Les moyens de commande peuvent être agencés pour, lorsque le bouton de commande est actionné, provoquer, notamment de façon continue, l'écartement ou le rapprochement des accoudoirs et des éléments de protection latérale entre une position de rapprochement extrême et une position d'écartement extrême.

La position d'écartement extrême peut être telle que l'accoudoir et l'assise forment un angle compris entre 90° et 180° voire entre 90° et 135°.

Le débattement des accoudoirs et éléments de protection latérale peut par exemple être compris entre 45° et 90°.

Les moyens de commande peuvent comporter des moyens de débrayage configurés pour permettre un basculement ou pivotement d'au moins un des accoudoirs et/ou d'au moins un des éléments de protection latérale dans une position d'installation, dans laquelle ledit accoudoir s'étend sensiblement dans le prolongement de ladite assise, et/ou respectivement ledit élément de protection latérale s'étend sensiblement dans le prolongement dudit dossier, de façon à faciliter l'installation d'un enfant dans le siège.

Dans ce cas, les moyens de débrayage peuvent être agencés pour permettre l'extraction de l'ergot hors de la rainure du disque.

Les moyens de débrayage peuvent comprendre un bouton de débrayage, permettant le passage dans la position d'installation lorsque l'on exerce une force sur au moins l'un des accoudoirs et/ou éléments de protection latérale.

Le bouton de débrayage peut être placé sur le bouton de commande ou sur au moins un accoudoir. Les moyens de débrayage peuvent permettre le débrayage d'un seul accoudoir et/ou d'un seul élément de protection latérale.

Dans le cas où les moyens de commande comprennent un ergot, les moyens de débrayage peuvent par exemple être configurés pour faire sortir l'ergot de la rainure, ce qui peut permettre de débrayer les deux accoudoirs et les deux éléments de protection latérale simultanément. En variante, les moyens de débrayage peuvent être configurés pour débrayer un seul accoudoir et élément de protection latérale. Dans une autre variante, les moyens de débrayage peuvent être configurés pour empêcher les moyens de liaison de jouer leur rôle, en permettant le débrayage d'un ou de deux accoudoirs sans permettre le débrayage du ou des éléments de protection latérale associés ou, inversement, en permettant le débrayage d'un ou de deux éléments de protection latérale, sans permettre le débrayage du ou des accoudoirs associés. Le débrayage permet à un utilisateur de déplacer, par exemple de faire pivoter, l'accoudoir et/ou l'élément de protection latérale indépendamment des moyens de commande, en appuyant sur celui-ci, par exemple.

Le siège peut comporter une embase ou non, l'embase étant disposée sous l'assise et l'assise pouvant être mobile en translation relativement à l'embase. Cela peut permettre de disposer le siège dans une position assise ou une position inclinée.

Au moins un accoudoir et/ou élément de protection latérale peut comporter une position d'installation dans laquelle l'accoudoir se trouve sensiblement dans le prolongement de l'assise ou, le cas échéant, dans laquelle l'élément de protection latérale se trouve sensiblement dans le prolongement du dossier, ce qui permet d'installer facilement l'enfant dans le siège. Dans ce cas, l'accoudoir et/ou l'élément de protection latérale peut comporter une position de voyage dans laquelle l'inclinaison de l'accoudoir et/ou de l'élément de protection latérale ne peut pas être supérieure à un angle maximum entre l'assise et l'accoudoir ou entre le dossier et l'élément de protection latérale de manière à assurer la sécurité de l'enfant pendant un trajet.

Dans ce cas, le siège peut comporter un système de sécurité empêchant par exemple l'attachement de l'enfant dans le siège si l'accoudoir et/ou l'élément de protection latérale n'est pas dans une position de voyage mais dans une position d'installation, par exemple.

L'invention pourra être mieux comprise à la lecture de la description qui va suivre, d'exemples de réalisations illustratifs non limitatifs de l'invention ainsi qu'à l'examen des dessins annexés, sur lesquels :
- la figure 1 est une vue de face schématique d'un siège comprenant des accoudoirs et éléments de protection latérale dans une première position rapprochée ;
- la figure 2 est une vue similaire à celle à la figure 1 lorsque les accoudoirs et éléments de protection latérale sont dans une deuxième position écartée ;
- la figure 3 illustre de manière schématique en vue de face un siège sur lequel un seul accoudoir et un seul élément de protection latérale ont été représentés dépourvus de tissu de revêtement ;
- les figures 4A et 4B sont des vues schématiques d'un accoudoir, d'un élément de protection latérale et de moyens de commande, en vue de face légèrement de côté, respectivement dans une première position rapprochée et dans une deuxième position écartée ;
- les figures 5A et 5B sont des vues schématiques d'un accoudoir, d'un élément de protection latérale et de moyens de commande, en vue de côté depuis l'intérieur du siège, respectivement dans une première position rapprochée et dans une deuxième position écartée ;
- les figures 6A et 6B représentent isolément de manière schématique les moyens de liaison entre le premier élément d'ossature d'un accoudoir et le deuxième élément d'ossature d'un élément de protection latérale, respectivement dans une première position rapprochée et dans une deuxième position écartée ;
- les figures 7 à 10 illustrent isolément, de manière schématique et partielle, des éléments des moyens de commande permettant de commander le déplacement des accoudoirs et éléments de protection latérale, et
- la figure 11 illustre un autre exemple de moyens de commande, de manière schématique et isolément, en vue de dessus.

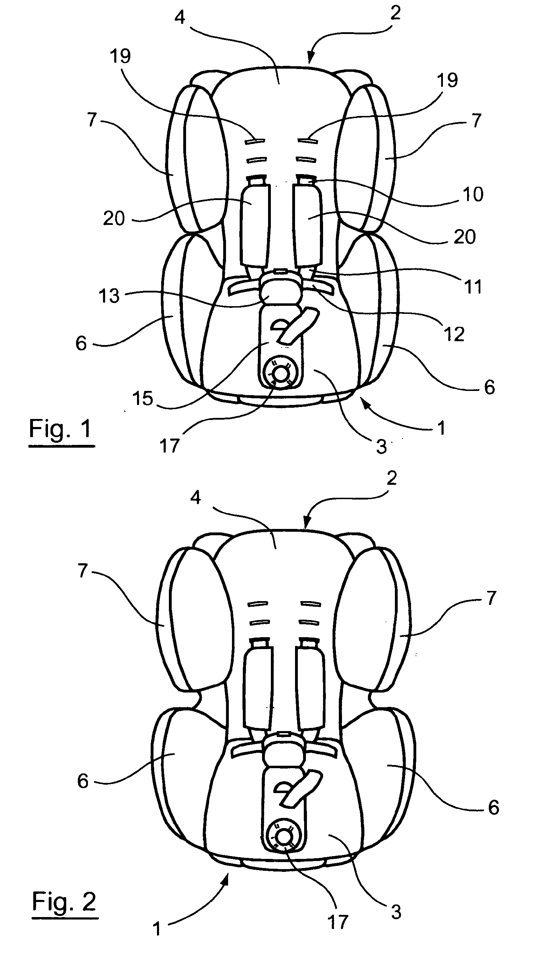

On a représenté sur la figure 1 un siège pour enfant destiné à être rapporté sur un siège de véhicule automobile.

Le siège 1 comporte une structure 2 comprenant une assise 3 et un dossier 4. Le siège 1 comporte en outre deux accoudoirs 6 disposés de part et d'autre de l'assise 3 et deux éléments de protection latérale 7 disposés respectivement de part et d'autre du dossier 4. Ces différents éléments, à savoir l'assise 3, le dossier 4, les accoudoirs 6 et les éléments de protection latérale 7 sont revêtus d'éléments de garniture comportant du tissu et de la mousse par exemple.

Outre la structure, les accoudoirs et les éléments de protection latérale, le siège 1 comporte dans l'exemple illustré, et de manière non limitative, et de façon connue en soi, un harnais de sécurité 10 comprenant deux bretelles 11 et deux parties de ceinture ventrale 12, les bretelles 11 et les parties de ceinture ventrale 12 étant réunies par une boucle 13 reliées à une patte d'entrejambe 15. La patte d'entrejambe 15 est disposée sur l'assise 3 dans l'exemple illustré, au milieu de celle-ci. Le harnais de sécurité 10 et ses différents éléments constitutifs peuvent être réalisés différemment sans sortir du cadre de l'invention.

Dans l'exemple illustré, la patte d'entrejambe 15 supporte en outre un bouton de commande 17 dont le rôle sera précisé ultérieurement.

Sur le dossier 4 du siège, une pluralité de paires de fentes 19, au travers desquelles passent les bretelles 11, ont été réalisées de manière à pouvoir régler en hauteur les bretelles 11 pour s'adapter à la morphologie de l'enfant. Un autre mode d'ajustement des bretelles non illustré peut consister en le déplacement vertical d'une têtière ou appuie-tête qui entraîne avec elle les bretelles.

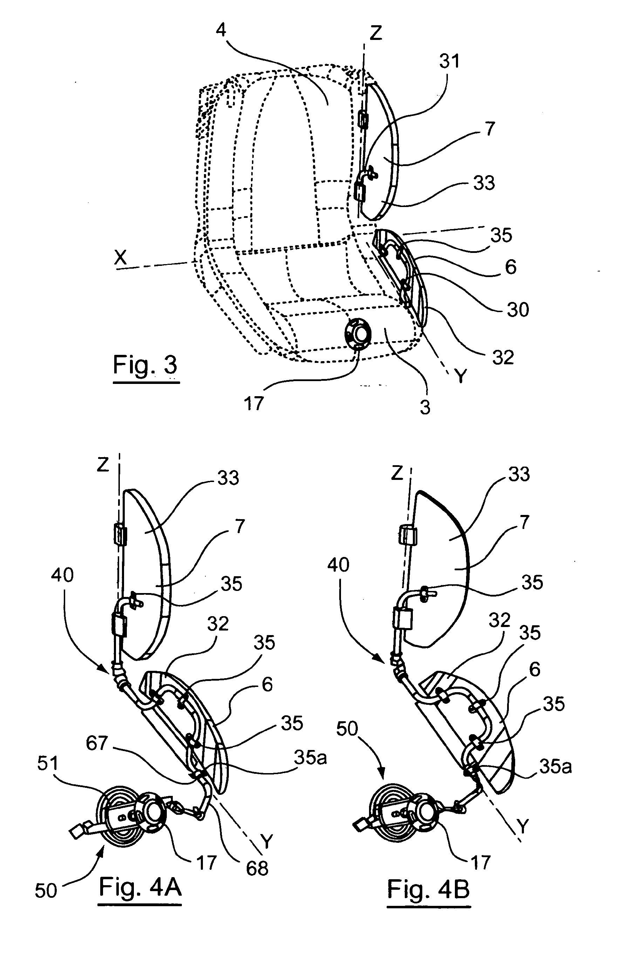

Le siège auto 1 comporte des moyens de commande 50, visibles sur les figures 4A et 4B, configurés pour commander le déplacement, notamment le pivotement des accoudoirs 6 et des éléments de protection latérale 7 relativement à la structure.

Sur la figure 1, on a représenté le siège lorsque les accoudoirs 6 et les éléments de protection latérale 7 sont en position rapprochée tandis que sur la figure 2, on a représenté ces mêmes accoudoirs 6 et éléments de protection latérale 7 en position éloignée ou écartée.

Le déplacement angulaire ou pivotement des accoudoirs 6 et des éléments de protection latérale 7 peut permettre d'adapter la configuration du siège à la morphologie de l'enfant par exemple.

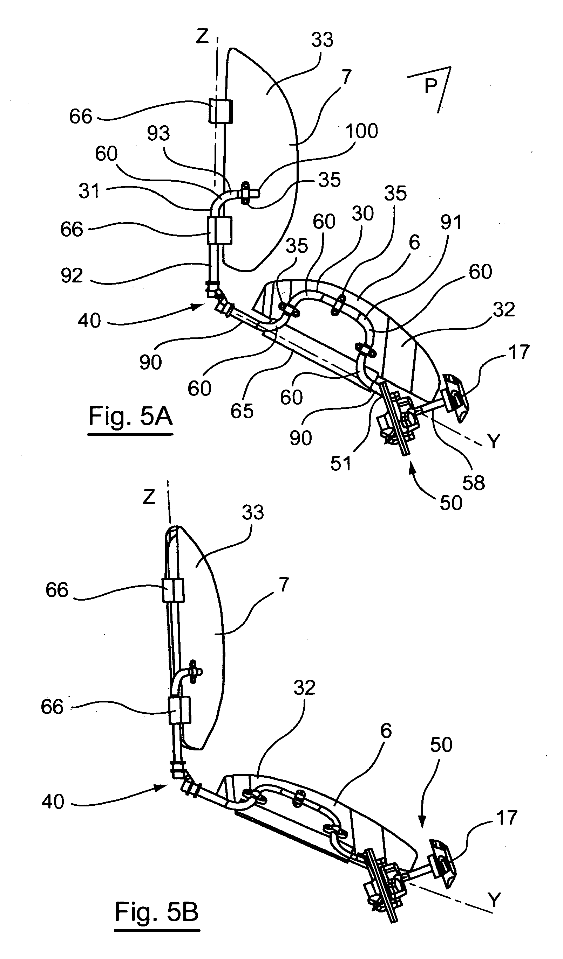

La figure 3 illustre une partie de structure du siège ainsi qu'un accoudoir 6 et un élément de protection latérale 7 dépourvus d'éléments de garniture. L'accoudoir 6 comprend un premier élément d'ossature 30. L'élément de protection latérale comprend un deuxième élément d'ossature 31. Le deuxième élément d'ossature 31 est distinct du premier élément d'ossature 30. Les premier et deuxième éléments d'ossature 30 et 31 peuvent appartenir à un même plan correspondant au plan P de la feuille dans la figure 5A, au moins dans la position rapprochée représentée sur cette figure.

L'accoudoir 6 comporte en outre, dans l'exemple illustré, un premier gabarit 32 tandis que l'élément de protection latérale 7 comporte un deuxième gabarit 33. Les premier et deuxième gabarits 32 et 33 consistent dans cet exemple en des plaques sur lesquelles sont adaptés des dispositifs d'absorption des chocs, non représentés dans un souci de clarté du dessin, afin de protéger latéralement l'enfant assis dans le siège. Les premier et deuxième éléments d'ossature 30 et 31 sont reliés respectivement aux premier et deuxième gabarits 32 et 33, à l'aide, dans l'exemple illustré, d'une pluralité de plaquettes vissées 35 permettant de maintenir les éléments d'ossature et de fixer ceux-ci, à l'aide de vis, au gabarit correspondant. Les éléments d'ossature peuvent être fixés aux gabarits différemment sans que l'on sorte pour autant du cadre de l'invention. Par exemple, les éléments d'ossature peuvent être reliés aux gabarits par clippage, par surmoulage. Les éléments d'ossature peuvent encore être réalisés d'une seule pièce avec les gabarits.

Le premier élément d'ossature 30 est également fixé par une plaquette 35a à la structure du siège, cette fixation empêchant tout déplacement de type translation de l'élément d'ossature par rapport à la structure sans toutefois empêcher un pivotement ou rotation de l'élément d'ossature vis-à-vis de la structure.

Le premier élément d'ossature 30 est entraîné en rotation autour d'un axe Y visible notamment sur les figures 4A, 4B et 5A, 5B, tandis que le deuxième élément d'ossature 31 est mobile en rotation autour d'un axe Z, l'axe Z pouvant être non perpendiculaire à l'axe Y et de manière générale, l'angle entre l'axe Z et l'axe Y peut être quelconque. La rotation autour de l'axe Y et de l'axe Z est avantageuse car elle permet d'adapter le mouvement des accoudoirs et des éléments de protection latérale à la morphologie de l'enfant, contrairement à l'art antérieur, notamment.

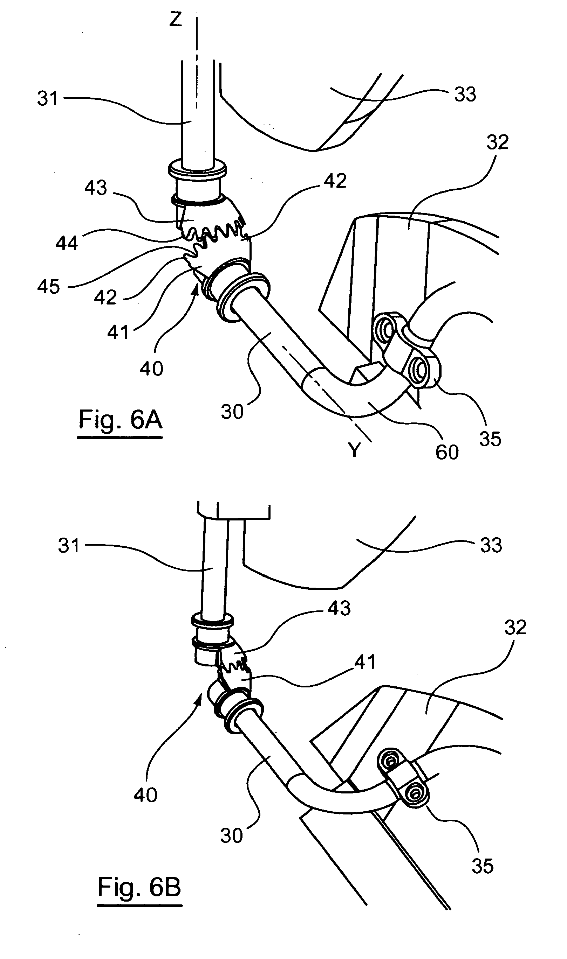

Comme visible sur les figures 4A et 4B, 5A et 5B, 6A et 6B, en particulier sur les figures 6A et 6B, des moyens de liaisons 40 sont formés entre le premier élément d'ossature 30 et le deuxième élément d'ossature 31. Les moyens de liaison 40 sont agencés pour entraîner le deuxième élément d'ossature 31 en déplacement, notamment en pivotement lorsque, par l'actionnement des moyens de commande 50, le premier élément d'ossature 30 est entraîné en déplacement, notamment en pivotement. Les moyens de liaison sont agencés pour transformer la rotation autour de l'axe Y en rotation autour de l'axe Z.

Dans l'exemple illustré, les moyens de liaison 40 sont sensiblement situés le long d'un axe X visible sur la figure 3 formant la séparation entre l'assise 3 et le dossier 4. Les axes X, Y et Z sont sécants sensiblement à hauteur des moyens de liaison 40, dans cet exemple. Comme visible sur la figure 3, l'axe Y appartient au plan du bord de l'assise 3 et l'axe Z appartient au plan du bord du dossier 4.

Dans l'exemple illustré, les moyens de liaison 40 comprennent un engrenage, notamment un engrenage avec renvoi d'angle. En effet, à une extrémité du premier élément d'ossature 30, celui-ci comporte une portion de cylindre évasé 41 comprenant à son extrémité évasée une pluralité de dents 42. Le deuxième élément d'ossature 31 comporte à son extrémité inférieure une portion de cylindre évasé 43 comportant à son extrémité évasée une pluralité de dents 44 agencées pour venir en prise avec les dents 42, venant se loger dans les interstices 45 situés entre les dents 42. Ainsi, lorsque l'accoudoir 6 est entraîné en pivotement autour de l'axe Y, le deuxième élément d'ossature 31 est également entraîné en pivotement autour de l'axe Z. En effet, la portion de cylindre évasé 41 dentée entraîne en rotation la portion de cylindre évasé 43 dentée, ce qui provoque le pivotement du deuxième élément d'ossature 31. Dans une variante non illustrée, le premier élément d'ossature 30 et la portion de cylindre évasé 41 sont réalisés d'une seule pièce. De même, le deuxième élément d'ossature 31 et la portion de cylindre évasé 43 peuvent être réalisés d'une seule pièce.

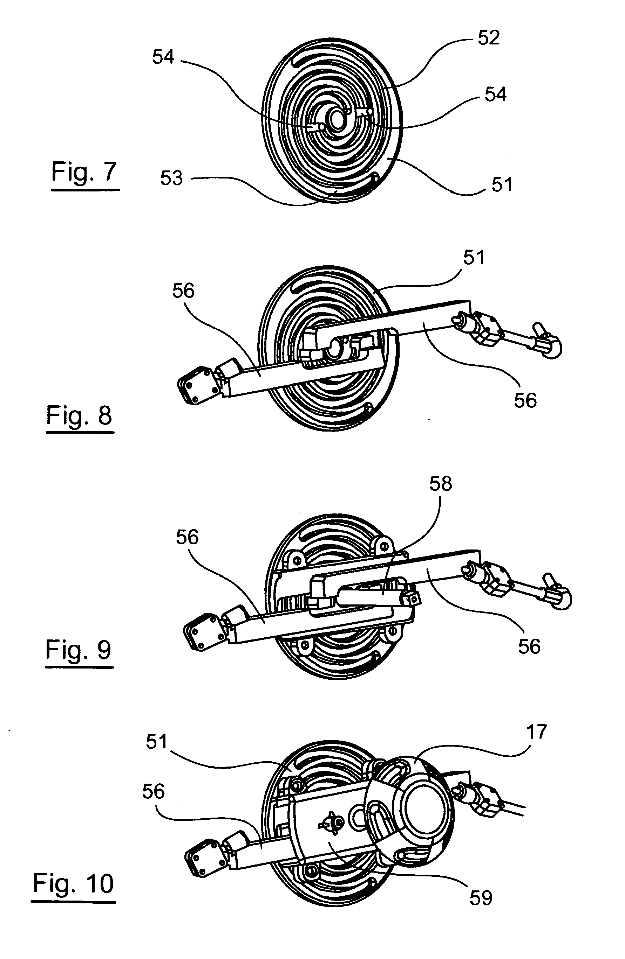

Pour entraîner en pivotement entre une position extrême rapprochée et une position extrême écartée les accoudoirs 6 et les éléments de protection latérale 7, des moyens de commande 50 sont prévus. Les moyens de commande 50, configurés pour commander le déplacement des accoudoirs 6 et des éléments de protection latérale 7 relativement à la structure 2, comprennent le bouton de commande 17 visible sur l'assise et manipulable en rotation par un utilisateur. Les moyens de commande 50 comportent également, comme on peut le voir plus en détail sur les figures 7 à 10, selon un mode de réalisation non limitatif, un disque 51 comprenant deux rainures 52 et 53 agencées en double spirale sur le disque.

Les moyens de commande 50 comprennent en outre deux ergots 54 (ou pions de spirale) agencés pour coulisser dans chacune des rainures 52 et 53, les ergots étant libres en rotation relativement au bouton de commande 17. Le disque 51 est solidaire en rotation du bouton de commande 17. Un axe 58 relie en effet de manière rigide le bouton de commande 17 au disque 51.

Dans cet exemple illustré, les moyens de commande 50 comportent en outre deux biellettes 56 parallèles entre elles et disposées de manière opposée comme cela est particulièrement visible sur la figure 8. Une coque 59 disposée autour des biellettes 56 permet de solidariser l'ensemble.

Les biellettes 56 sont liées aux ergots 54 et mobiles en translation relativement au disque 51 de la manière suivante. Lorsque le bouton de commande 17 est entraîné en rotation par un utilisateur, le disque 51 solidaire du bouton de commande se met à tourner lui aussi ce qui déplace les ergots 54 dans les rainures 52 et 53, ce qui permet alors de déplacer les biellettes 56 en les éloignant l'une de l'autre ou en les rapprochant l'une de l'autre selon le sens de rotation du disque. Le déplacement en translation des biellettes 56 entraîne le premier élément d'ossature 30 en déplacement, les biellettes 56 et le premier élément d'ossature 30 étant reliés entre eux par une liaison telle que l'éloignement relatif des biellettes 56 provoque le rapprochement des accoudoirs 6 et donc des éléments de protection latérale 7 tandis que le rapprochement relatif des biellettes 56 provoque l'écartement des accoudoirs 6 et éléments de protection latérale 7. La liaison entre la biellette 56 et une extrémité 67 du premier élément d'ossature 30 comporte une tige 68 coudée, formant un angle avec la biellette d'une part et s'étendant dans le prolongement du premier élément d'ossature d'autre part. L'extrémité de la tige 68 qui est reliée avec le premier élément d'ossature 30 est fixe relativement à celui-ci. L'extrémité de la tige 68 reliée directement ou indirectement à la biellette est fixée à celle-ci selon une liaison pivot. Ainsi, un déplacement de la biellette entraîne la tige 68 et donc le premier élément d'ossature 30 en rotation. La tige 68 et le premier élément d'ossature 30 peuvent être réalisés d'une seule pièce ou, comme dans l'exemple illustré, de deux pièces différentes. Dans une variante non illustrée, le mouvement inverse des biellettes peut engendrer le même effet.

Le premier élément d'ossature 30 et/ou le deuxième élément d'ossature 31 peut former en un ou plusieurs endroits au moins un coude 60 notamment quatre coudes 60 pour le premier élément d'ossature 30 et un coude 60 pour le deuxième élément d'ossature 31. Ces coudes peuvent permettre d'accompagner au mieux le pivotement des gabarits 32 et 33. Une première partie 90 du premier élément d'ossature 30 s'étend selon l'axe Y, aux extrémités du premier élément d'ossature liées aux moyens de commande et aux moyens de liaison. Une deuxième partie 91 du premier élément d'ossature 30, fixé par les plaquettes 35 au gabarit 32, du fait des coudes 60 formés sur le premier élément d'ossature, s'étend sensiblement perpendiculairement à l'axe Y, de manière à transmettre au gabarit 32 la rotation subie par le premier élément d'ossature 30. De même, une première partie 92 du deuxième élément d'ossature 31, à savoir la partie d'extrémité liée aux moyens de liaison 40, s'étend selon l'axe Z, tandis qu'une deuxième partie 93 du deuxième élément d'ossature 31 s'étend sensiblement perpendiculairement à l'axe Z, après le coude 60. Le deuxième élément d'ossature comporte une extrémité 100 située derrière le deuxième gabarit 33 dans ce mode de réalisation.

Les premier et deuxième gabarits 32 et 33 sont reliés à l'assise et au dossier respectivement par des charnières 65 et 66 permettant une liaison rigide avec l'assise et le dossier sans toutefois empêcher la rotation des accoudoirs et éléments de protection latéraux 6 et 7 par rapport à la structure.

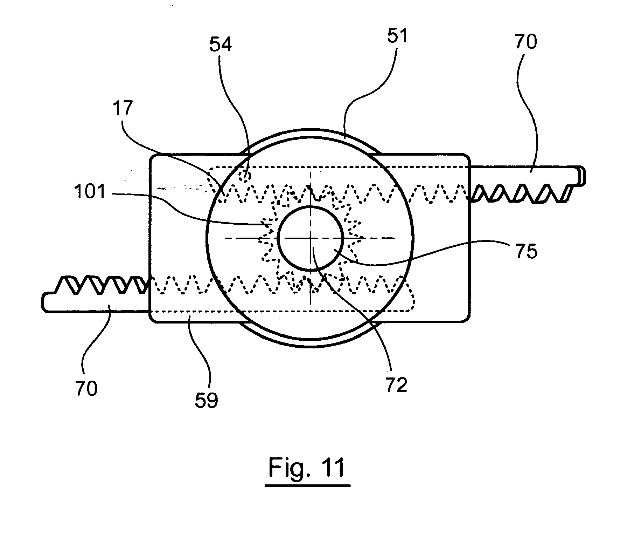

Un autre mode de réalisation des moyens de commande 50 est décrit en regard de la figure 11.

Dans cet exemple, les biellettes 56 sont remplacées par des crémaillères 70. Les moyens de commande 50 comprennent, dans cet exemple, un seul ergot et une seule rainure courbe 52 formée sur le disque 51, le déplacement de l'ergot 54 dans la rainure 52 entraînant le déplacement simultané des deux crémaillères 70 par l'intermédiaire d'un pignon fou 101 représenté en pointillés sur la figure, monté autour de l'axe de rotation du bouton de commande 17.

Dans cet exemple également, les moyens de commande 50 comportent des moyens de débrayage 75 configurés pour permettre le basculement d'au moins un desdits accoudoirs 6 et/ou d'au moins un desdits éléments de protection latérale 7 dans une position d'installation sensiblement dans le prolongement de ladite assise, respectivement dudit dossier, de façon à faciliter l'installation d'un enfant dans le siège.

Les moyens de débrayage 75 sont agencés, dans l'exemple illustré, pour permettre l'extraction de l'ergot 54 hors de la rainure 52 du disque 51.

Pour ce faire, les moyens de débrayage 75 comprennent dans cet exemple un bouton de débrayage 72 permettant le passage dans la position d'installation lorsque l'on exerce une force sur au moins l'un des accoudoirs 6 et/ou éléments de protection latérale 7.

Dans ce mode de réalisation, le bouton de débrayage 72 est placé sur le bouton de commande 17 et le débrayage se fait au niveau du disque, donc simultanément pour les accoudoirs et éléments de protection latérale. Dans un autre mode de réalisation, le débrayage peut être réalisé au niveau de chaque accoudoir ou élément de protection latérale. Dans ce cas, les moyens de débrayage 75 peuvent permettre le débrayage d'un seul accoudoir et d'un seul élément de protection latérale. Le bouton de débrayage peut encore être placé ailleurs, par exemple au niveau d'un accoudoir.

Le bouton de débrayage 72 disposé sur le bouton de commande 17 est agencé pour permettre d'extraire l'ergot 54 en repoussant le disque pour dégager l'ergot de la rainure, de manière à pouvoir, en appuyant sur un accoudoir, forcer le pivotement de celui-ci. Cela peut permettre d'écarter l'accoudoir de façon extrême, de manière à pouvoir installer l'enfant dans le siège de façon aisée. Un système de sécurité peut, dans ce cas, être prévu pour forcer l'utilisateur à remettre le ou les accoudoirs dans une position davantage rapprochée pour assurer la protection latérale de l'enfant durant le voyage.

Comme illustré sur les figures 1 et 2, seul le bouton de commande 17 peut être visible par l'utilisateur du siège, parmi les moyens de commande 50, les autres éléments des moyens de commande étant dissimulés par le revêtement ou dans la structure.

L'invention n'est bien sûr pas limitée aux exemples qui viennent d'être décrits.

En particulier les moyens de liaison 40 peuvent être constitués par tout autre type de liaison qu'un engrenage avec renvoi d'angle, par exemple un cardan ou un renvoi d'angle souple.

Le harnais de sécurité 10 peut être intégré dans le siège ou bien être remplacé par une ceinture à trois points du véhicule automobile, auquel cas le harnais de sécurité 10 n'est pas présent sur le siège, notamment pour les sièges pour enfants plus âgés.

Le siège peut comporter une embase ou non. Une telle embase non visible sur les figures peut être utile pour permettre une inclinaison du dossier.

Selon un mode de réalisation de l'invention, les premier et deuxième éléments d'ossature sont distincts et reliés par des moyens de liaison. Il est à noter que l'ossature formée des premier et deuxième éléments d'ossature peut également consister en une seule pièce présentant une souplesse ou un moyen de liaison souple reliant les premier et deuxième éléments d'ossature entre eux, et adapté pour transmettre un déplacement imprimé à l'un des éléments d'ossature par les moyens de commande à l'autre élément d'ossature, sans sortir du cadre de l'invention tel que défini par les revendications.

Dans la description, les expressions « comportant un » et « comprenant un » doivent être comprises comme étant synonymes des expressions « comprenant au moins un » et « comportant au moins un » sauf si le contraire est spécifié.

## Revendications

1. Siège (1) pour enfant destiné à être monté sur un siège de véhicule automobile, comportant une structure (2) comprenant au moins une assise (3) et un dossier (4), chaque bord latéral de ladite assise (3) étant équipé d'un accoudoir (6) et chaque bord latéral dudit dossier (4) étant équipé d'un élément de protection latérale (7), des moyens de commande (50) permettant de contrôler le pivotement desdits accoudoirs (6) et desdits éléments de protection latérale (7) relativement à ladite structure (2),
**caractérisé en ce qu'**il comprend, à chaque bord latéral de ladite structure (2) :
- un premier élément d'ossature (30) d'un desdits accoudoirs (6),
- un deuxième élément d'ossature (31) d'un desdits éléments de protection latérale (7), et
- des moyens de liaison (40) entre le premier élément d'ossature (30) et le deuxième élément d'ossature (31), agencés pour entraîner en rotation un desdits éléments d'ossature lorsqu'une rotation est imprimée à l'autre desdits éléments d'ossature par l'actionnement desdits moyens de commande (50), les axes de rotation des éléments d'ossatures étants distincts.

2. Siège selon la revendication précédente, **caractérisé en ce que** ledit premier élément d'ossature (30) pivote autour d'un axe (Y) sensiblement parallèle à un plan défini par ladite assise, et **en ce que** ledit deuxième élément d'ossature (31) pivote autour d'un axe (Z) sensiblement parallèle à un plan défini par ledit dossier.

3. Siège selon l'une quelconque des revendications précédentes, dans lequel les moyens de liaison (40) entre le premier élément d'ossature et le deuxième élément d'ossature sont situés sensiblement le long d'un axe (X) formant la séparation entre l'assise et le dossier.

4. Siège selon l'une quelconque des revendications précédentes, **caractérisé en ce que** lesdits moyens de liaison (40) appartiennent au groupe comprenant les engrenages avec renvoi d'angle, les cardans et les dispositifs de renvoi d'angle souples.

5. Siège selon l'une quelconque des revendications précédentes, **caractérisé en ce que** les moyens de commande (50) comportent un bouton de commande (17) mobile en rotation, permettant à un utilisateur d'actionner les moyens de commande (50) pour modifier l'orientation des accoudoirs (6) et des éléments de protection latérale (7).

6. Siège selon l'une quelconque des revendications précédentes, **caractérisé en ce que** ledit bouton de commande (17) est disposé sur ladite assise, sur une portion s'étendant vers l'avant dudit siège.

7. Siège selon l'une quelconque des revendications précédentes, dans lequel les moyens de commande (50) comportent :
- un disque (51) solidaire en rotation du bouton de commande (17), le disque comprenant au moins une rainure (52 ; 53) courbe,
- au moins un ergot (54) agencé pour coulisser dans ladite rainure (52 ; 53),
- au moins une pièce de liaison reliant ledit ergot audit premier élément d'ossature, ladite pièce de liaison étant configurée de telle sorte que le déplacement de l'ergot (54) dans la rainure (52 ; 53) entraîne le déplacement, notamment le pivotement, du premier élément d'ossature (30).

8. Siège selon la revendication précédente, dans lequel ladite pièce de liaison comporte au moins une crémaillère (70) et/ou au moins une biellette (56) liée audit ergot (54)et mobile en translation relativement au disque (51).

9. Siège selon l'une quelconque des revendications précédentes, **caractérisé en ce que** les moyens de commande (50) comportent des moyens de débrayage configurés pour permettre un basculement d'au moins un desdits accoudoirs (6) et/ou d'au moins un desdits éléments de protection latérale (7) dans une position d'installation, dans laquelle ledit accoudoir s'étend sensiblement dans le prolongement de ladite assise (3), et/ou respectivement ledit élément de protection latérale s'étend sensiblement dans le prolongement dudit dossier (4), de façon à faciliter l'installation d'un enfant dans le siège.

10. Siège selon les revendications 7 et 9, **caractérisé en ce que** les moyens de débrayage sont agencés pour permettre l'extraction de l'ergot (54) hors de la rainure (52 ; 53) du disque (51).

11. Siège selon l'une des revendications 9 et 10, **caractérisé en ce que** les moyens de débrayage comprennent un bouton de débrayage (72), permettant le passage dans ladite position d'installation lorsque l'on exerce une force sur au moins l'un desdits accoudoirs (6) et/ou éléments de protection latérale (7).

## Claims

1. Seat (1) for a child, which seat is intended to be mounted on a motor vehicle seat and comprises a structure (2) comprising at least one seating surface (3) and a backrest (4), each lateral edge of said seating surface (3) being equipped with an armrest (6) and each lateral edge of the said backrest (4) being equipped with a lateral-protection element (7), control means (50) making it possible to control the pivoting of said armrests (6) and of said lateral-protection elements (7) relative to said structure (2),
**characterised in that** said seat comprises, at each lateral edge of said structure (2):
- a first frame element (30) belonging to one of said armrests (6);
- a second frame element (31) belonging to one of said lateral-protection elements (7); and
- linking means (40) between the first frame element (30) and the second frame element (31), which linking means are arranged so as to drive in rotation one of said frame elements when a rotation is imparted to the other of said frame elements as a result of activation of said control means (50), the axes of rotation of the frame elements being different.

2. Seat according to the preceding claim, **characterised in that** said first frame element (30) pivots about an axis (Y) which is substantially parallel to a plane defined by said seating surface, and **in that** said second frame element (31) pivots about an axis (Z) which is substantially parallel to a plane defined by said backrest.

3. Seat according to either of the preceding claims, wherein the linking means (40) between the first frame element and the second frame element are situated substantially along an axis (X) that forms the separation between the seating surface and the backrest.

4. Seat according to any of the preceding claims, **characterised in that** said linking means (40) belong to the group comprising transmissions with angle-deflection, universal joints and flexible angle-deflecting devices.

5. Seat according to any of the preceding claims, **characterised in that** the control means (50) comprise a control button (17) which is movable in rotation and allows a user to activate the control means (50) in order to modify the orientation of the armrests (6) and of the lateral-protection elements (7).

6. Seat according to any of the preceding claims, **characterised in that** the control button (17) is disposed on said seating surface, on a portion that extends towards the front of said seat.

7. Seat according to any of the preceding claims, wherein the control means (50) comprise:
- a disc (51) which is integral in rotation with the control button (17), said disc comprising at least one curved groove (52; 53);
- at least one pin (54) which is arranged so as to slide within the said groove (52; 53);
- at least one linking piece that connects said pin to the said first frame element, said linking piece being configured in such a way that displacement of the pin (54) within the groove (52; 53) brings about displacement, especially pivoting, of the first frame element (30).

8. Seat according to the preceding claim, wherein said linking piece comprises at least one rack (70) and/or at least one connecting rod (56) which is linked to said pin (54) and is movable in translation relative to the disc (51).

9. Seat according to any of the preceding claims, **characterised in that** the control means (50) comprise disengaging means which are configured so as to allow tilting of at least one of said armrests (6) and/or of at least one of said lateral-protection elements (7) into a settling-in position in which said armrest extends substantially in the prolongation of said seating surface (3), and/or, respectively, said lateral-protection element (7) extends substantially in the prolongation of said backrest (4), so as to make it easier to settle a child in the seat.

10. Seat according to claims 7 and 9, **characterised in that** the disengaging means are arranged so as to allow the extraction of the pin (54) from the groove (52; 53) in the disc (51).

11. Seat according to either of claims 9 or 10, **characterised in that** the disengaging means comprise a disengaging button (72) that makes it possible to change to said settling-in position when a force is exerted on at least one of said armrests (6) and/or lateral-protection elements (7).

## Patentansprüche

1. Kindersitz (1), der dazu bestimmt ist, auf einem Kraftfahrzeugsitz montiert zu werden, aufweisend eine Struktur (2) mit mindestens einer Sitzfläche (3) und einer Rückenlehne (4), wobei jeder Seitenrand der Sitzfläche (3) mit einer Armstütze (6) und jeder Seitenrand der Rückenlehne (4) mit einem Seitenschutzelement (7) versehen ist, wobei Steuermittel (50) es ermöglichen, das Schwenken der Armstützen (6) und der Seitenschutzelemente (7) in Bezug zu der Struktur (2) zu kontrollieren,
**dadurch gekennzeichnet, dass** er an jedem Seitenrand der Struktur (2) folgendes aufweist:
- ein erstes Gerüstelement (30) einer der Armstützen (6),
- ein zweites Gerüstelement (31) eines der Seitenschutzelemente (7), und
- Verbindungsmittel (40) zwischen dem ersten Gerüstelement (30) und dem zweiten Gerüstelement (31), die derart vorgesehen sind, dass sie eines der Gerüstelemente rotatorisch antreiben, wenn das andere der Gerüstelemente durch Betätigung der Steuermittel (50) in Drehung versetzt wird, wobei die Drehachsen der Gerüstelemente unterschiedlich sind.

2. Sitz nach dem vorhergehenden Anspruch, **dadurch gekennzeichnet, dass** das erste Gerüstelement (30) um eine Achse (Y) im Wesentlichen parallel zu einer von der Sitzfläche definierten Ebene schwenkt, und dass das zweite Gerüstelement (31) um eine Achse (Z) im Wesentlichen zu einer von der Rückenlehne definierten Ebene schwenkt.

3. Sitz nach einem der vorhergehenden Ansprüche, bei dem die Verbindungsmittel (40) zwischen dem ersten Gerüstelement und dem zweiten Gerüstelement im Wesentlichen entlang einer Achse (X) angeordnet sind, welche die Trennung zwischen der Sitzfläche und der Rückenlehne bildet.

4. Sitz nach einem der vorhergehenden Ansprüche, **dadurch gekennzeichnet, dass** die Verbindungsmittel (40) der Gruppe, aufweisend die Getriebe mit Winkelvorgelege, die Kardangelenke und die flexiblen Winkelvorgelegevorrichtungen, angehören.

5. Sitz nach einem der vorhergehenden Ansprüche, **dadurch gekennzeichnet, dass** die Steuermittel (50) einen drehbeweglichen Steuerknopf (17) aufweisen, die es einem Benutzer ermöglichen, die Steuermittel (50) zu betätigen, um die Ausrichtung der Armstützen (6) und der Seitenschutzelemente (7) zu verändern.

6. Sitz nach einem der vorhergehenden Ansprüche, **dadurch gekennzeichnet, dass** der Steuerknopf (17) auf der Sitzfläche auf einem Abschnitt angeordnet ist, der sich in Richtung des vorderen Sitzbereichs erstreckt.

7. Sitz nach einem der vorhergehenden Ansprüche, bei dem die Steuermittel (50) folgendes aufweisen:
- eine Scheibe (51), die drehfest mit dem Steuerknopf (17) verbunden ist, wobei die Scheibe mindestens eine gekrümmte Nut (52; 53) umfasst,
- mindestens einen Haken (54), der zum Gleiten in der Nut (52; 53) vorgesehen ist,
- mindestens ein Verbindungsstück, das den Haken mit dem ersten Gerüstelement verbindet, wobei das Verbindungsstück derart ausgeführt ist, dass die Bewegung des Hakens (54) in der Nut (52; 53) zur Bewegung, insbesondere zum Schwenken, des ersten Gerüstelements (30) führt.

8. Sitz nach dem vorhergehenden Anspruch, bei dem das Verbindungsstück mindestens eine Zahnstange (70) und/oder mindestens einen Schwingarm (56), der mit dem Haken (54) verbunden und in Bezug zur Scheibe (51) in Translation beweglich ist, aufweist.

9. Sitz nach einem der vorhergehenden Ansprüche, **dadurch gekennzeichnet, dass** die Steuermittel (50) Auskuppelmittel aufweisen, die derart ausgeführt sind, dass sie ein Kippen mindestens einer der Armstützen (6) und/oder mindestens eines der Seitenschutzelemente (7) in eine Einrichtposition ermöglichen, in der sich die Armstütze im Wesentlichen in der Verlängerung der Sitzfläche (3) erstreckt, und/oder sich das Seitenschutzelement im Wesentlichen in der Verlängerung der Rückenlehne (4) erstreckt, um das Einsetzen eines Kindes in den Sitz zu erleichtern.

10. Sitz nach den Ansprüchen 7 und 9, **dadurch gekennzeichnet, dass** die Auskuppelmittel dazu vorgesehen sind, die Entnahme des Hakens (54) aus der Nut (52; 53) der Scheibe (51) zu ermöglichen.

11. Sitz nach einem der Ansprüche 9 und 10, **dadurch gekennzeichnet, dass** die Auskuppelmittel einen Auskuppelknopf (72) umfassen, der den Übergang in die Einrichtposition ermöglicht, wenn eine Kraft auf mindestens eine der Armstützen (6) und/oder Seitenschutzelemente (7) ausgeübt wird.
